# EUROPÄISCHE PATENTANMELDUNG

(11) **EP 1 193 497 A2**
(43) Veröffentlichungstag der Anmeldung: **03.04.2002**
(21) Anmeldenummer: 01120537.4
(22) Anmeldetag: 29.08.2001
(51) Int. Cl.: G01N 30/72

(54) **Verfahren und Vorrichtung zur Charakterisierung von Oberflächeneigenschaften gasgetragener Aerosolpartikel**

(30) Priorität: 14.09.2000 DE 10045449
(71) Anmelder: GSF-Forschungszentrum für Umwelt und Gesundheit GmbH, 85764 Neuherberg (DE)
(72) Erfinder: Zimmeramnn, Ralf, Dr., 80339 München (DE); Kettrup, Antonius, Prof. Dr., 59821 Ansbach (DE)

(57) **Zusammenfassung**

Gegenstand der Erfindung ist ein Verfahren und eine Vorrichtung zur online Bestimmung der spezifischen Oberfläche oder ähnlicher Eigenschaften basierend auf Einteilchen-Lasermassenspektrometrie.

Aufgabe der Erfindung ist es, Vorrichtung und Verfahren so auszugestalten, daß online Bestimmungen möglich sind.

Gelöst wird diese Aufgabe durch Einsaugen einer aerosolpartikelhaltigen Probe (1) in eine Belegungsapparatur (5) in der die Partikel mit einem gasgetragenen Tracer der mit den Aerosolpartikeln nicht chemisch reagiert in Kontakt gebracht werden, ziehen einer repräsentativen Aerosolprobe aus der Belegungsappartur, Trennen der Aerosolpartikel von der Gasphase, Bestrahlen der vereinzelten Aerosolpartikel mit Licht geeigneter Wellenlänge und Intensität zur Desorption der an der Oberfläche der Aerosolpartikel gebundenen Verbindungen und Nachweis der desorbierten Verbindungen.

## Beschreibung

Gegenstand der Erfindung ist ein Verfahren und eine Vorrichtung zur online Bestimmung der spezifischen Oberfläche oder ähnlicher Eigenschaften basierend auf Einteilchen-Lasermassenspektrometrie.

Neben Parametern wie die Partikelgrößenverteilung, Partikelkonzentration und der chemischen Zusammensetzung der Partikel, ist die spezifische Oberfläche eines Aerosols besonders bedeutend, da Eigenschaften wie chemische und katalytische Reaktivität aber auch biologische Wirksamkeit mit ihr assoziiert sein können. Weiterhin wird die Oberfläche von Aerosolpartikeln als eine der Größen diskutiert, die für die Wirkung von Aerosolen auf die menschlichen Gesundheit verantwortlich sein kann.

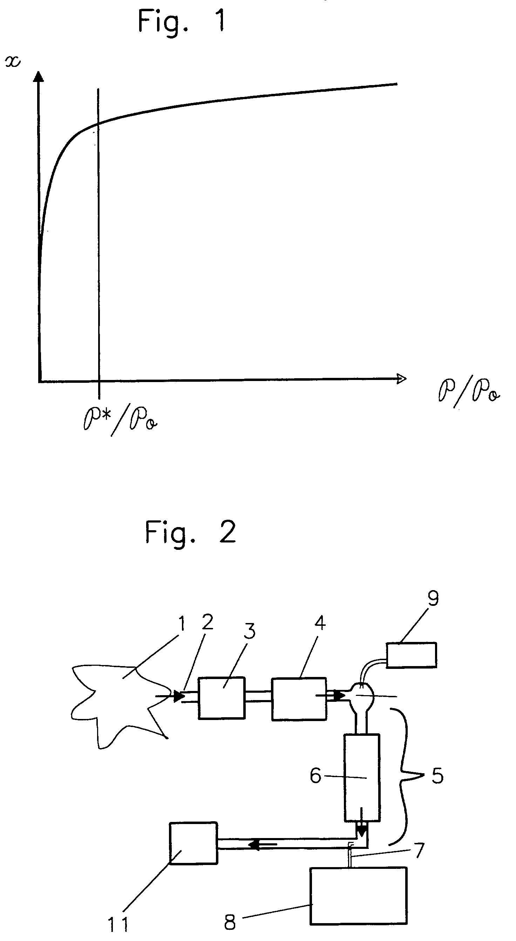

Verfahren zur Bestimmung der Oberfläche von Aerosolpartikeln beruhen im allgemeinen auf der Bestimmung von Adsorptionsisothermen (BET). Nachteil dieser Verfahren ist, daß die spezifische Oberfläche von realen Aerosolen bisher nur mit off-line Methoden, d.h. durch Analyse einer gesammelten Probe (0.1-5 mg) bestimmt werden kann. Die Verfahren zur Bestimmung der spezifischen Oberfläche beruhen auf der Messung der Adsorption von Gasen auf der Oberfläche. Die Masse von einer Aerosolprobe absorbierten in Abhängigkeit von der Gaskonzentration ist durch die Absorptionsisotherme gegeben (BET-Isotherme, siehe Figur 1). Die Messung der Oberfläche einer Partikelprobe erfolgt i. a. durch Zusammenbringen einer definierten Probenmenge mit dem Adsorptionsgas, wobei entweder die Reduktion des Gasmenge (volumetrische Methoden) oder die Massenzunahme der Partikelprobe (gravimetrische Methoden) bestimmt wird.

### Stand der Technik

Die Bestimmung der Oberfläche von Aerosolen erfolgt an gesammelten Proben nach der BET-Methode oder abgeleiteten Verfahren durch Bestimmung eines oder mehrerer Punkt der BET- Absorptionsisotherme an Partikelproben ¹(mittels Filtern oder Impaktoren abscheidend gewonnen). Eine on-line Methode zur Bestimmung der Oberfläche von luftgetragenen Teilchen ist bisher nicht bekannt.

In der Literatur sind auf Basis der Massenspektrometrie arbeitende Analysengeräte beschrieben, welche eine chemische Charakterisierung von luftgetragenen Aerosolpartikeln erlauben (Einteilchen-Lasermassenspektrometrie)². Die Aerosolpartikel werden aus dem luftgetragenen Zustand mittels eines speziellen Einlaßsystems in das Vakuum des Massenspektrometers transferiert. Die chemischen Analyse der Aerosolpartikel erfolgt nach deren Größenbestimmung (aerodynamischer Durchmesser) nach dem Prinzip der Lasermicroprobemassenspektrometrie (Ionisation mit intensiv fokussierten 337 nm oder 266 nm Laserpulsen zur Elementbestimmung bzw. zum Nachweis von Fragmenten organischer Spezies).

Einteilchen-Lasermassenspektrometrie wurde in den letzten Jahren für eine Reihe von Untersuchungen an Umweltaerosolen oder an im Labor generierten Aerosolen eingesetzt.

Eine Analyse der Oberflächenzusammensetzung kann erfolgen, indem das Aerosolpartikel von zwei kurz aufeinanderfolgenden Laserpulsen bestrahlt wird, wobei der erste ein IR-Laserpuls zur Desorption von auf der Oberfläche des Partikels befindlichen Verbindungen ist. Der zweite Puls ist ein UV-Laserpuls zur REMPI-Ionisation der desorbierten Verbindungen, die dann im TOFMS Spektrometer nachgewiesen werden ³

### Gegenstand der Erfindung

Gegenstand der Erfindung ist eine Vorrichtung und ein Verfahren zur on-line Bestimmung der Oberfächeneigenschaften von Aerosolen.

Das Meßprinzip beruht auf der Analyse einer Tracer-Verbindung die in einer Belegungsapparatur auf die gasgetragenen Partikel auf-adsorbiert wird.

Entscheidend ist, daß diese Tracer-Verbindung weder mit chemischen Verbindungen, die sich bereits auf den Aerosolen befinden, noch mit der Oberfläche selbst reagiert.

So sind saure oder basische Gase wir z.B. NH₃, HCl, HNO₃ oder H₂SO₄ nicht geeignet, da sie zur Bildung von salzartigen Verbindungen auf den Partikeln führen können (also reagieren). Nach der BET-Theorie läßt sich die Belegung relativ einfach so steuern, daß eine Monolage des Tracers auf die Partikel auf-adsorbiert. Mit einem Aerosolmassenspektrometer werden nun Einteilchen-Analysen der Partikel vorgenommen. Dabei wird neben dem aerodynamischen Durchmesser des Partikels die Menge des auf-adsorbierten Tracers bestimmt, die proportional zur Oberfläche des Partikels ist. Weiterhin kann parallel eine chemische Charakterisierung des Partikelkerns erhalten werden.

Der Gegenstand der Erfindung wird durch die Merkmale der Patentansprüche 1 und 8 erreicht. Die übrigen Ansprüche beschreiben vorteilhafte Ausgestaltungen der Erfindung.

### Beschreibung Apparatur und Verfahren

Die Erfindung wird im Folgenden anhand von Auführungsbeispielen mit Hilfe der Figuren näher erläutert.

Dabei zeigt
die Fig. 1 eine typische Adsorptionsisotherme und
die Fig. 2 eine schematische Darstellung der Gesamtapparatur.
Die Fig. 3 zeigt eine Anordnung mit einem doppelten Reflektron- Flugzeit- Massenspektrometer.

Die Figur 1 zeigt eine typische BET-Absorptionsisotherme, wobei P der Partialdruck der adsorbierenden Substanz (Tracer, z. B. Benzol oder N₂), P₀ der Gesamtdruck, P* die Konzentration der adsorbierenden Substanz bei der sich ungefähr eine Monolage der adsorbierenden Substanz auf den Partikeln befindet und x die Masse der auf den Partikeln adsorbierten Substanz ist. In der Figur 2 ist ein beispielhaftes Schema der Gesamtapparatur dargestellt. Die Apparatur besteht aus einer Probenahmesonde 2, durch die das zu untersuchende Aerosol 1 eingesaugt wird.

Vor dem Einleiten in die Belegungsapparatur kann das Aerosol 1 konditioniert werden.

Durch einen Denuder 4 können organische und anorganische Gaspasenkomponenten des Aerosols absepariert werden, weiterhin kann das Aerosol in einer Trocknungseinheit 3 getrocknet werden. Eine Durchführung der Konditionierung in 4 und 3 bei erhöhter Temperatur oder alternierend höherer und niedrigerer Temperatur erlaubt eine effektivere "Reinigung" der Partikel von absorbierten flüchtigen Chemikalien. Die Konditionierungsschritte können in beliebiger Reihenfolge und Anzahl wiederholt und kombiniert werden. Weiterhin können verschieden gestaltete Denuder- und Trocknungseinheiten 3,4 und verschiedene Adsorptionsmedien (Aktivkohle, Tenax-Harz etc.) und Trocknungsmedien (Silica-Gel etc.) eingesetzt werden.

Zur Bestimmung der Oberfläche der konditionierten, luftgetragenen Aerosolpartikel werden diese in einer geeigneten Belegungsapparatur (bzw. Belegungsstrecke) 5 einem Tracer-Gas ausgesetzt. Dieser Tracer sollte folgende Eigenschaften aufweisen:
* nicht reaktiv mit den Aerosolverbindungen
* einfach und effektiv mit REMPI ionisierbar
* keine Masseninterferenz mit typischen Aerosolbestandteilen aufweisen
* thermisch stabil (um Desorptionsprozeß quantitativ zu über stehen)
* geeignete Flüchtigkeit

Die Flüchtigkeit des Tracers sollte einerseits eine zügige Einstellung des Absorptionsgleichgewichtes erlauben, anderseits sollte ohne heizen eine ausreichend hohe Tracerkonzentration ohne Kondensation einstellbar sein. Beispielsweise ist Benzol (nativ oder isotopenmarkiert) ein guter Tracer. Alternativ könnte Acetylen, Acetaldehyd oder Formaldehyd verwendet werden (kleiner, dringt eher in Poren ein) oder ein größerer Aromat wie z.B. Pyren oder Coronen. Der Aerosolstrom mit den konditionierten Partikel strömt in die Belegungsstrecke 5 (z. B. eine Rohrreaktor). Zuvor wird das konditionierte Aerosol in dem Mischvolumen 10 mit partikelfreiem Gas (z. B. He) aus der Standardgasquelle 9, indem eine definierte Konzentration der Tracer-Verbindung vorhanden ist, durchmischt. Die Standardgasquelle 9 kann z.B. aus Gasflaschen (für TracerKonzentration >1 ppmv) oder Permeations- oder Diffusionsstandardgasgeneratoren 4 (für kleinere Konzentrationen) bestehen. Die Konzentration des Tracers ist so eingestellt, daß die Belegung der Partikel im Bereich einer Monolage liegt. Auf dem Weg des Aerosols durch die Belegungsstrecke 5 stellt sich ein, durch die BET-Isotherme beschriebenes Gleichgewicht zwischen partikelabsorbierten und freien Tracermolekülen (Benzol), ein.

Die BET Isotherme (Fig.1) zeigt zuerst einen sehr steilen Ansieg der Anzahl absorbierten Gasmoleküle mit steigender Tracer-Gaskonzentration (P/P₀). Nach Erreichen der Monolage fällt dieser Anstieg stark ab ("Knie" in der BET-Kurve ¹). Das heißt, daß Konzentrationen des Tracers gefunden werden können, bei denen die Belegung der Partikel i. a. einer Monolage sehr nahe kommt (etwas überhalb des "Knies" der BET-Kurve).

Nach einer definierten Verweilzeit in der Belegungsstrecke 5 (die Kontaktzeit zwischen Tracer und Aerosolpartikeln in der Belegungsstrecke 5 ist durch die Länge der Belegungsstrecke 5 und die Flußgeschwindigkeit in dieser gegeben) wird eine Teilstrom des Aerosols über eine Sonde 7 einem Aerosolmassenspektrometer 8 zugeführt.

Im Einlaßsystem des Aerosolmassenspektrometers werden die Partikel z. B. durch ein Skimmer-System mit differentiellen Vakuumpumpstufen schlagartig von der Gasphase separiert ². Es bildet sich ein Partikelstrahl 30 aus. Im Einlaßbereich erfolgt die Erfassung der Partikel und die Bestimmung bzw. Festlegung des aerodynamischen Durchmessers 2, 3 über eine Lichtschrankentechnik. Dabei passiert ein Aerosolpartikel z. B. nacheinander zwei cw-Laserstrahlen 22. Das Streulicht wird detektiert und aus dem zeitlichen Abstand der beiden Streusignale wird der aerodynamische Durchmesser bestimmt 3. In der Ionenquelle werden einzelne der erfaßten Partikel gezielt mit einem oder mehreren Laserpulsen 23,24,25 bestrahlt um die Konzentration von absorbiertem Tracer und andere Partikeleigenschaften im TOFMS nachzuweisen.

Alternativ kann vor oder nach der Belegungsapparatur, z. B. über einen elektrostatischen Klassifizierer 5, eine Größenfraktion aus dem polydispersen Aerosol herausselektiert werden (d. h. Einlaß eines selektierten, monodispersen Aerosols).

Der Nachweis der Konzentration von absorbiertem Tracer und anderen Partikeleigenschaften kann dann auch in einem sog. "free running" Experiment erfolgen, mit dem auch ultrafeine Partikel erfaßbar sind ⁶.

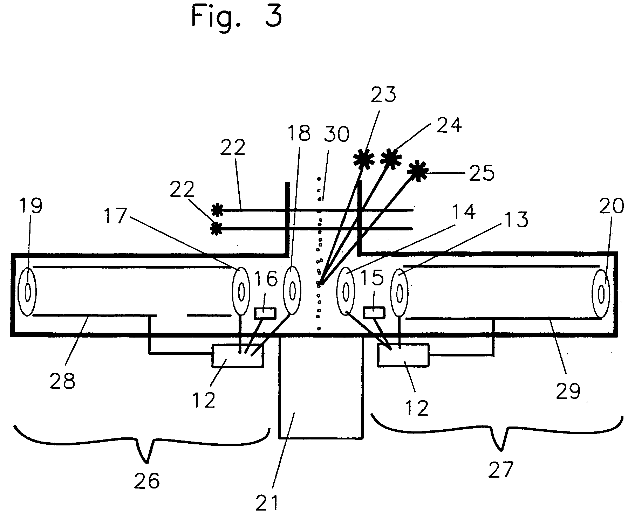

Für den Nachweis können einfache 2 oder vorteilhaft doppelte Reflektron-Spektrometer ⁷ verwendet werden (Figur 3).

Der Nachweis des Tracers kann in einem Einlaserstrahlexperiment versucht werden ^{2, 7}, jedoch sind hierbei die relativ geringe Empfindlichkeit und starke Matrixeffekte als deutliche Nachteile festzuhalten. Vorteilhaft ist die Verwendung eines Zweistufen - Ionisationsprozesses wobei der Tracer zuerst durch ein Desorptions-Laserpuls 23 (z. B. IR-Laser) desorbiert wird. Etwa 50 ns bis 100 µs nach dem Desorptions-Laserpuls erfolgt eine Nachionisation (über REMPI oder VUV-Einphotonenionisation) des desorbierten Tracers.

Im folgenden ist eine Abschätzung der Ionenausbeute für ein vollständig mit Benzol belegtes Partikel gegeben:

Die Oberfläche eines idealen, glatten sphärischen Partikels mit 100 nm Durchmesser beträgt 3.1 10⁻¹⁴ m². Die Fläche eines Benzolmoleküls beträgt 4 10⁻¹⁹ m². Die Zahl der Benzolmoleküle in einer idealen (d.h. vollständigen) Monolage beträgt damit 78.000. Die Desorption mit IR-Laserlicht 23 (z. B. CO₂ Laser λ = 10.6 µₘ) ist relativ effizient. Unter den Annahme von ca. 50 % Verlust befinden sich etwa 1 µs nach dem Desorptions IR-Laserpuls 23 (Laserpulsdauer ca. 1-100 ns) ca. 40.000 Benzolmoleküle in einem "Halo" um das Partikel. Die Bestrahlung mit einem UV-Laserlichtpuls 24 zur REMPI-Ionisation ergibt ca. 4.000 Ionen (bei ^{λ}=248 nm oder einer spezifischen Benzol Resonanzlinie, 0.1-15 ns Laserpulsdauer und einer Laserleistungsdichte von etwa 10⁷ W/cm² ist die Ionisationseffizienz für Benzol ca. 10%) von denen in einem empfindlichkeitsoptimierten TOFMS wiederum ca. 10%, also ca. 400 Ionen, nachgewiesen werden können.

Die Verwendung eines doppelten TOFMS Systems (26 und 27) und gepulsten Spannungen zum Abzug der Ionen ("delayed extraction" Technik) sowie eventuell weiteren Laserpulsen 25 erlaubt eine große Variabilität im Nachweis von Tracer und anderen Partikeleigenschaften.

In folgenden sind einige mögliche Verfahren vorgestellt. Sie beziehen sich auf die Figuren 2 und 3. Es ist zu beachten daß die ionenoptischen Elemente in der Figur 3 nicht vollständig dargestellt sind. Neben den gezeigten Blenden und Elektroden der Ionenquelle können z.B. Linsensysteme, weitere Elektroden und Blenden etc. eingesetzt werden. Die Verwendung von sog. mass-gates, also Vorrichtungen die es erlauben bestimmte Massen oder Massenbereiche aus dem TOF Massenspektrum herauszupulsen, kann ebenfalls für bestimmte Anwendungen interessant sein.
1. Verwendung eines doppelten Reflektron TOFMS und zwei Laserpulsen 23,24. Das Zentrum der Ionenquelle ist feldfrei während Desorptions-Laserpuls 23 (z.B. Blenden 18, 14 sind auf Erdpotential). Eventuell gebildete, direkte Ionen vom Desorptions-Laserpuls 23 werden nicht beeinträchtigt. Nach dem Nachionisations-Laserpuls 24, der 10-10000 ns nach dem Desorptions-Laserpuls 23 den Bereich um das Partikel bestrahlt, werden die Blenden 18 und 14 der Ionenquelle schlagartig auf Hochspannung gelegt. Das TOFMS wird im bipolaren Modus betrieben (ein TOFMS 26 für die negativen, das andere TOFMS 27 für die positive Ionen). Die direkten Ionen (positive und negative) sowie die durch Nachionisation gebildeten Ionen (positive) werden daraufhin in den TOFMS 26,27 nachgewiesen. Im positiven Massenspektrum sind daher der Tracer zusammen mit den direkten Ionen sichtbar, im negativen Massenspektrum nur direkte Ionen. Somit können Einzelteilchen wie folgt charakterisiert werden:
   * aerodynamischer Durchmesser (aus der Lichtschrankenmes sung mit 22),
   * Partikel- Typ (durch z.B. Klassifikation des Musters di rekter Ionen ⁸) und
   * Oberflächeneigenschaft (~ Tracer-Signal).
2. Verwendung eines doppelten Reflektron-TOFMS (siehe Fig. 3) und zwei Laserpulsen 23,24. An den Blenden der Ionenquelle 17,18,14,13 liegen bereits während des Desorptions-Laserpuls 23 geeignete Potentiale an. Das TOFMS wird im bipolaren Mode betrieben (ein TOFMS 26 für die negativen, das andere TOFMS 27 für die positive Ionen). Direkte Ionen, die vom Desorptionlaserpuls 23 gebildet werden, werden abgezogen. Die direkten negativen Ionen werden im TOFMS 26 nachwiesen. Die direkten positiven Ionen werden zwar durch die Blende 14 im TOFMS 27 abgezogen aber z.B. durch ein Defelektionsfeld so abgelenkt daß sie den Detektor 20 des TOFMS 27 nicht erreichen. Das Deflektionsfeld kann durch ein stark negatives Potential an der Elektrode 15 realisiert werden, die somit die positiven Ionen auffängt. Nach dem Nachionisationslaserpuls 24 wird das Deflektionsfeld in der Ionenquelle ausgeschaltet, um die durch die Nachionisation mit Laserpuls 24 gebildeten positiven Ionen ohne Einfluß von positiven Ionen, die durch den Laserpuls 23 erzeugt wurden, nachzuweisen. Gleichzeitig kann ein Deflektionsfeld im Bereich der Ionenquelle, der für das "negative" TOFMS 26 zuständig ist, eine Blende 16 auf ein geeignetes Potential gelegt werden, das eventuell vom Nachionisationslaserpuls 24 gebildete negative Ionen vom Detektor 19 abhält. Im positiven MS ist daher nur der mit Laserpuls 24 nachionisierte Tracer sichtbar (und eventuell andere nachionisierte Spezies), im negativen MS nur direkte Ionen von Laserpuls 23.
3. Verwendung eines doppelten Reflektron-TOFMS (siehe Fig. 3) und zwei Laserpulsen 23,24. Beide Detektoren 19,20 sind für den Nachweis von positiven Ionen ausgelegt. Die Blenden der Ionenquelle 18,14,13 liegen auf geeigneten Hochspannungen während des Desorptions-Laserpuls 23, so daß direkte positive Ionen im TOFMS 27 nachgewiesen werden. Die direkten negativen Ionen werden zwar durch die Blende 18 abgezogen aber z.B. durch ein Defelektionsfeld (Elektrode 16) so abgelenkt daß sie den Detektor 19 des TOFMS 26 nicht erreichen. Vor dem Nachionisations-Laserpuls 24 werden die Spannungen der Blenden 17, 18 und 14 auf geeignete Hochspannungen gelegt um im TOFMS 26 positive Ionen aus dem in TOFMS 26 abzuzeihen (die primären Ionen haben bereits die Ionenquelle des TOFMS 27 verlassen und sind im feldfreien Driftraum). Gleichzeitig wird das Deflektionsfeld (Elektrode 16) ausgeschaltet.
   Die durch die Nachionisation mit Laserpuls 24 gebildeten positiven Ionen werden (getrennt von den positiven Ionen, die durch den Laserpuls 23 erzeugt wurden) im TOFMS 26 nachgewiesen. Gleichzeitig kann ein Deflektionsfeld im Bereich der Ionenquelle, im TOFMS 27 an die Elektrode 15 gelegt werden, um eventuell vom Nachionisations-Laserpuls 24 gebildete negative Ionen vom Detektor 20 abzuhalten.
   Im positiven MS des TOFMS 27 sind die direkten Ionen von Laserpuls 23 sichtbar.
   Im positiven MS des TOFMS 26 der mit Laserpuls 24 nachionisierte Tracer sichtbar (und eventuell andere nachionisierte Spezies).
4. Verwendung eines doppelten Reflektron-TOFMS (siehe Fig. 3) und drei Laserpulsen 23,24,25. Bei dieser Variante erfolgt zuerst die (sanfte) Desorption mit dem Desorptions-Laserpuls 23. Nach dem Nachionisations-Laserpuls 24 wird der Tracer (positive Ionen) zum Nachweis in das TOFMS 26 abgezogen. Das TOFMS 27 wird durch geeignete Potentiale an den Blenden bzw. Elektroden 14,15,13 abgeschlossen (d.h. keine Ionen die durch die Laserpuls 23 oder 24 erzeugt wurden gelangen zum Detektor 20). Kurz darauf (frühesten wenn die ionisierten Tracermoleküle die Ionenquelle verlassen haben) wird ein weiterer Laserstrahl 25 auf dasselbe Partikel geschossen, dessen desorbierte und nachionisierte Tracermoleküle bereits nachgewiesen werden. Der Laserstrahl 25 (z.B. 266nm, 248nm oder 357nm) ist hart fokussiert und erzeugt Ionen (negative und positive) die den Partikeltyp charakterisieren ⁸. Die Blenden 13, 18, 14 werden zu einem geeigneten Zeitpunkt auf geeignete Potentiale gelegt um entweder die positiven oder die negativen Ionen im TOFMS 27 mit dem Detektor 20 nachzuweisen. Da das zeitliche Delay zwischen den Laserpulsen 23, 24 einerseits und dem Laserpuls 25 andererseits, einige 100 ns bis zu einigen µs betragen muß, um die Ionen die durch die Laserpulse 23 und 24 gebildet worden sind aus der Ionenquelle abzuziehen, hat sich der Ort des Partikels bereits deutlich verändert wenn der Laserpuls 25 ausgelöst wird. Daher muß das Delay zwischen den Laserpulsen 23, 24 einerseits und dem Laserpuls 25 andererseits, entsprechend der Geschwindigkeit des Partikels (~ aerodynamische Durchmesser), die zuvor mit der Lichtschrankentechnik 22 bestimmt wurde, angepaßt werden. Ein positiver Nebeneffekt diese Vorgehens ist, daß die Bestimmung des aerodynamischen Durchmessers "überprüft" wird. Werden durch den Laserpuls 25 keine Ionen erzeugt, war die vorangegangene Größenbestimmung des Partikels wahrscheinlich falsch.
5. Verwendung eines doppelten Reflektron-TOFMS (siehe Fig. 3) und vier Laserpulsen ( zweimal eine Sequenz aus 23,24). Bei dieser Variante erfolgt zuerst die (sanfte) Desorption mit dem Desorptions-Laserpuls 23. Nach dem Nachionisations-Laserpuls 24 wird der Tracer (positive Ionen) zum Nachweis in das TOFMS 26 abgezogen. Das TOFMS 27 wird durch geeignete Potentiale an den Blenden bzw. Elektroden 14,15,13 abgeschlossen (d.h. keine Ionen die durch die Laserpuls 23 oder 24 erzeugt wurden gelangen zum Detektor 20). Kurz darauf (frühesten wenn die ionisierten Tracermoleküle die Ionenquelle verlassen haben) wird ein weiterer Desorptions Laserstrahl 23 auf dasselbe Partikel geschossen, dessen im ersten Schritt desorbierte und nachionisierte Tracermoleküle bereits nachgewiesen werden. Der weitere Laserstrahl 23 (z. B. 10,6 µm) desorbiert eventuell noch vorhanden Tracermoleküle. Nach einer entsprechenden Zeit werden im zweiten Schritt desorbierte Tracermoleküle durch einen weiterern Nachionisations-Laserstrahl 24 ionisiert. Die Blenden 13, 18, 14 werden zu einem geeigneten Zeitpunkt auf geeignete Potentiale gelegt um die im zweiten Schritt erzeugten positiven Tracermolekülionen im TOFMS 27 mit dem Detektor 20 nachzuweisen. Da das Delay zwischen dem ersten Satz Laserpulsen 23 und 24 einerseits und dem zweiten Satz Laserpulsen 23 und 24 andererseits, einige 100 ns bis zu einigen µs betragen muß, um die Ionen die durch die ersten Laserpulse 23 und 24 gebildet worden sind aus der Ionenquelle abzuziehen, hat sich der Ort des Partikels bereits deutlich verändert wenn der zweite Satz Laserpulsen 23 und 24 ausgelöst wird. Daher muß das Delay zwischen dem ersten Laserpulsen 23, 24 einerseits und den zweiten Satz Laserpulsen 23 und 24 andererseits, entsprechend der Geschwindigkeit des Partikels (~ aerodynamische Durchmesser), die zuvor mit der Lichtschrankentechnik 22 bestimmt wurde, angepaßt werden. Ein positiver Nebeneffekt diese Vorgehens ist, daß die Bestimmung des aerodynamischen Durchmessers "überprüft" wird. Werden durch den zweiten Satz Laserpulse 23 und 24 keine Ionen erzeugt, war die Größenbestimmung des Partikels wahrscheinlich falsch.

Die Bestimmung der Oberfläche eines Einzelpartikels ist zwar prinzipiell möglich, vorteilhafter und praktikabler ist wohl die Bestimmung von mittleren Oberflächen bestimmter Partikel-Klassen oder Größenfraktionen. Die Vorgehensweise zur Bestimmung von mittleren Oberflächen bestimmter Partikel-Klassen geht folgendermaßen vonstatten: Nach einer gewissen Meßdauer sind für eine größere Anzahl von Partikeln Daten vorhanden. Für jedes Partikel sind dabei folgende Daten wesentlich:
* der (aerodynamische) Durchmesser,
* die Intensität des Tracersignals (proportional zur Oberflä che),
* Information über die Partikel-Klasse (aus z.B. den direkten Ionen, falls vorhanden)

Mittels dieses Datensatzes kann die mittlere Oberfläche (~ Intensität des Tracersignals) einer bestimmten Größenfraktion einer bestimmten Partikel-Klasse bestimmt werden. Die Einteilung in Partikel-Klassen ergibt je nach Klassifizierungsalgorithmus eine unterschiedliche Anzahl von Klassen. Beispielsweise wurde die Einteilung von Innenraum-Aerosol in 5 Klassen beschrieben (Sekundäres Aerosol, Ruß, Salz, Ruß aus Biomasseverbrennung und mineralische Partikel) ⁸.

Mit dem erfindungsgemäßen Verfahren ließe sich z.B. die mittlere Oberfläche von sekundären Aerosolpartikeln mit 200, 300 oder 800 nm Durchmesser bestimmen.

Als Referenz können Daten aus der Analyse von mit Tracermolekülen belegte sphärischen Standardaerosolpartikeln mit gleichem aerodynamischen Durchmesser verwendet werden.

Für ultrafeine Partikel d.h. Partikel mit einem aerodynamischen Durchmesser von unter etwa 150 nm kann die Expansions/Lichtschrankentechnik ^{2, 3} nicht angewendet werden da kein ausreichendes Streulichtsignal zu Detektion erhalten wird und außerdem sich die Geschwindigkeit der Partikel der des Gases weitgehend angenähert hat. Wie oben erwähnt kann dann durch einen Mobilitätsklassierer ⁵ eine Größenfraktion aus dem polydispersen Aerosol herausselektiert werden (d.h. Einlaß eines monodispersen Aerosols) und der Nachweis der Konzentration von absorbiertem Tracer und anderen Partikeleigenschaften erfolgt in einem sog. "free running" Experiment ⁶. Für den Einlaß von ultrafeinen Partikel wird vorzugsweise eine sog. "aerodynamische Linse" angewendet.

Beim Nachweis des Tracers ist zu beachten, daß die Abseparation des Gasphasenanteils möglichst effizient ist um den Untergrund an Gasphasenionisation (die ja direkt zum Siganl des Tracesrs beiträgt), möglichst klein zu halten. Wenn der Nachweis der Tracerverbindung über REMPI erfolgt kann auch eine spektroskopische Separation der Tracermoleküle aus der Gasphase gegenüber denen aus der Laserdesorption/Nachionisation erreicht werden. Diese Sparation beruht auf dr unterschiedlichen Temperatur. Der Einlaß über eine Düse 2, 3 führt zur Ausbildung eines Überschallmolekularstrahls und kann damit zu einer Abkühlung der Gasmoleküle genutzt werden. Die Abkühlung der Gasmoleküle führt z.B. bei Benzol zu extrem schmalen Absorptionsbanden. Solche scharfe Banden gekühlter Moleküle werden für deren hochspezifischen Nachweis mit REMPI benutzt 9. Warme Moleküle hingegen weisen wesentlich breitere Banden auf.

Dieser Effekt kann hier zur Diskriminierung der gasphasengetragenen Tracermoleküle von den partikeladsorbierten Tracermolekülen angewendet werden. Der Laser für den REMPI-Nachweis der partikeladsorbierten Tracermoleküle wird auf eine geeignete Wellenlänge eingestellt, die abseits der scharfen Absorptionsresonanzen für das kalte Tracermolekül liegt aber deutlich Absorptionsbeitrag zeigt wenn das Tracermolekül warm ist. Die REMPI-Ionisationseffizienz für kalte Gasphasenmoleküle ist somit sehr klein. Bei der Laserdesorption durch den Desorptionslaser 23 entstehen sehr warme/heiße Tracermoleküle, die wiederum relativ gut mit der geeigneten Laserwellenlänge über REMPI nachweisbar sind.

### Anwendungsbeispiele

### a) Verbrennungsaerosole aus industriellen Quellen

Bei Verbrennungsprozessen entstehen eine große Zahl von Partikeln. Die (Ruß-)Partikel können extrem unterschiedliche Oberflächen aufweisen. Neben der Beladung der Rußpartikel mit toxischen organischen Verbindungen wie PAK oder der Konzentration wird auch die spezifische Oberfläche als ein relevanter Parameter diskutiert. Die Größe der Oberfläche der entstehenden Rußpartikel hängt von den Verbrennungsbedingungen in der Feuerungsanlage. Durch eine online Untersuchung der spezifischen Oberfläche als Funktion von Prozeßparametern können umwelt- und gesundheitsschonende Verbrennungsbedingungen gefunden werden (prozeßintegrierter Umweltschutz).

### b) Monitoring von Umweltaerosolen

Mit dem erfindungsgemäßen Verfahren läßt sich das Umweltaerosol umfassend charakterisieren (aerodynam. Durchmesser, Oberfläche, chemische Zusammensetzung). Dies ist interessant z.B. um die Belastung der Bevölkerung mit anthropogenen Aerosolen und deren gesundheitliche Auswirkungen zu erfassen.

### c) Überwachung der Produktion definierten Nanopartikel

Mit dem erfindungsgemäßen Verfahren lassen sich das künstlich erzzeugte bzw. produzierte Aerosole umfassend charakterisieren (aerodynam. Durchmesser, Oberfläche, chemische Zusammensetzung). Dies ist interessant z.B. um die Produktions-/Prozeßbedingungen zu optimieren und zu Überwachen.

### Bezugszeichenliste

- 1: Aerosol
- 2: Sonde zur Aerosol-Probenahme
- 3: Trocknungseinheit
- 4: Denuder
- 5: Belegungsstrecke
- 6: Thermostat für Belegungsstrecke
- 7: Probenahme für Aerosolmassenspektrometer
- 8: Aerosolmassenspektrometer
- 9: Standardgasquelle
- 10: Mischvolumen
- 11: Pumpe
- 12: elektronisch gesteuerte, individuell pulsbare Spannungsver sorgung für Blenden (17,18,14,13), Liner (28,29), Ablenk platten (15,16) und andere ionenoptische Elemente (nicht
- 13: dargestellt)
- 14: Zweite Blende von TOFMS 27
- 15: Erste Blende von TOFMS 27
- 16: Ablenkplatte von TOFMS 27
- 17: Ablenkplatte von TOFMS 26
- 18: Zweite Blende von TOFMS 26
- 19: Erste Blende von TOFMS 26
- 20: Detektor von TOFMS 26
- 21: Detektor von TOFMS 27
- 21: Vakuumpumpe
- 22: cw-Laserstahlen (einer oder zwei) für die Bestimmung des aerodynamischen Durchmessers (Lichtschranke)
- 23: gepulster Laserstrahl zur Desorption von (i.a. IR_licht, z. B. 10.6µm aus CO₂-Laser))
- 24: gepulster Laserstrahl zur Nachionisation mit REMPI oder Einphotonenionisation (i.a. UV oder VUV, 0.1-30 ns Puls breite, 0.01 - 100000 µJ/Puls)
- 25: Intensiver, gepulster Laserstrahl zur Desorption/Ionisation (z. B. 337 nm aus Stickstofflaser, 266nm aus YAG-Laser oder 248 nm aus Excimerlaser)
- 26: Erstes TOFMS für negative (bipolarer Mode) oder positive Ionen
- 27: Zweites TOFMS für positive Ionen
- 28: Liner für TOFMS 26
- 29: Liner für TOFMS 27
- 30: Aerosolpartikel-Strahl

### Literaturverzeichnis

(1) Rothenberg, S. J.; Denee, P. B.; Cheng, Y. S.; Hanson, R. L.; Yeh, H. C.; Eidson, A. F. *Advances in Colloid and Interface* Science **1982**, *15,* 223-249.
(2) Hinz, K.-P.; Kaufmann, R.; Spengler, B. *Anal. Chem*. **1994**, 66, 2071-2076.
(3) Morrical, B. D.; Fergenson, D. P.; Prather, K. A. *J. Am. Soc. Mass Spectr.* **1998**, *9*, 1068-1073.
(4) Namienik, J. *Chromatographia* **1983**, *17*, 47-48.
(5) Liu, B. Y. H.; Pui, D. Y. H. J. *Aerosol Sci.* **1975**, *6*, 249-264.
(6) Carson, P. G.; Johnston, M. V.; Wexler, A. S. *Rapid Commun. Mass Sp.* **1997**, *11,* 993-996.
(7) Gard, E.; Mayer, J. E.; Morrical, B. D.; Dienes, T.; Fergenson, D. P.; Prather, K. A. *Anal. Chem.* **1997**, *69*, 4083-4091.
(8) Hinz, K.-P.; Greweling, M.; Drews, F.; Spengler, B. J. Am. *Soc. Mass Spectr.* **1999**, *10,* 648-660.
(9) Zimmermann, R.; Lermer, C.; Schramm, K.-W.; Kettrup, A.; Boesl, U. Eur. *Mass Spectrom.* **1995**, *1*, 341-351.

## Patentansprüche

1. Verfahren zur Charakterisierung der Oberfläche gasgetragener Aerosolpartikel mit folgenden Verfahrensschritten:
a) Einsaugen einer aerosolpartikelhaltigen Probe in eine Belegungsapparatur in der die Partikel mit einem gasgetragenen Tracer der mit den Aerosolpartikeln nicht chemisch reagiert in Kontakt gebracht werden, wobei ein bestimme Konzentration des Tracers über eine vorgegebene Zeit hinweg eingestellt wird,
b) ziehen einer repräsentativen Aerosolprobe aus der Belegungsappartur, nach einer definierten Wecheselwirkungszeit zwischen Tracervebindung und den Aerosolpartikeln,
c) Trennen der Aerosolpartikel von der Gasphase und vereinzeln der Aerosolpartikel durch Expansion der Aerosolprobe in ein Vakuum,
d) Bestrahlen der vereinzelten Aerosolpartikel mit Licht geeigneter Wellenlänge und Intensität zur Desorption der an der Oberfläche der Aerosolpartikel gebundenen Verbindungen und
e) Nachweis der desorbierten Verbindungen.

2. Verfahren nach Anspruch 1, **dadurch gekennzeichnet daß** die Verfahrenschritte a) bis e) bei verschiedenen Konzentrationen des Tracers durchgeführt werden und aus der Menge des desorbierten und nachgewiesenen Tracers eine Adsorptionsisotherme ermittelt wird.

3. Verfahren nach Anspruch 1, **dadurch gekennzeichnet, dass** die Verfahrensschritte a bis e bei einer bestimmten Konzentration des Tracers durchgeführt werden, bei der sich nach der Absorptionsisotherme eine Belegung der Aerosolpartikel mit etwa einer Monolage des Tracers ausbildet, so dass aus der Menge des desorbierten und nachgewiesenen Tracers auf Oberflächeneigenschaften der Partikel geschlossen werden kann.

4. Verfahren nach einem der Ansprüche 1 bis 3, **dadurch gekennzeichnet, daß** die Größe der Aerosolpartikel vor der Desorption bestimmt wird.

5. Verfahren nach einem der Ansprüche 1 bis 4, **dadurch gekennzeichnet, daß** die aerosolpartikelhaltige Probe vor dem Einsaugen in die Belegungsapparatur konditioniert wird, wobei die Konditionierung beispielsweise ein Trocknungsund/oder ein Ausgasungs- und/oder ein Belegungsschritt ist.

6. Verfahren nach einem der Ansprüche 1 bis 5, **dadurch gekennzeichnet, daß** nur bestimmte Größenfraktionen der Aerosolprobe für den Einlaß in die Belegungsapparatur oder für die Konditionierung zugelassen werden.

7. Verfahren nach einem der Ansprüche 1 bis 6, **dadurch gekennzeichnet, daß** der Nachweis der desorbierten Verbindungen durch Ionisation mit Hilfe der Resonanzverstärkten Multiphotonenionisation (REMPI) und/oder der Einphotonenionisation mit VUV-Licht erfolgt wobei die Desorption der an der Oberfläche der Aerosolpartikel gebundenen Verbindungen durch einen vorgeschalteten Laserpuls erfolgt.

8. Vorrichtung zur Charakterisierung gasgetragener Aerosolpartikel bestehend aus:
a) einer Vorrichtung zur Konditionierung von aerosolhaltigen Proben wobei die Konditionierung beispielsweise ein Trocknungs- und/oder ein Ausgasungs- und/oder ein Belegungsschritt ist,
b) einer Belegungsapparatur zum Beladen der konditionierten aerosolpartikelhaltigen Probe mit einem Tracer,
c) einer Vorrichtung zur repräsentativen Probenahme aus der Belegungsapparatur
d) einem Aerosol-Massenspektrometer dem die Probe aus der Belegungsapparatur zugeführt wird,
e) einer Laseranordnung zu Erzeugen von zwei zeitlich eng korrelierten Laserpulsen für die Desorption und Ionisation der Belegung und
f) einer Auswerteeinheit zur Ermittlung der Massenbelegung der Aerosolpartikel.

9. Verwendung eines doppelten Reflektron Flugzeitmassenspektrometers (TOFMS) im unipolaren oder bipolaren Modus mit der Möglichkeit zum gepulsten Abzug der Ionen (delayed extraction) zur Detektion von
a) der Tracerkonzentration die von dem Partikel getragen wird sowie
b) Ionensignalen, die Aufschuß über die Natur des Partikels geben.
